(19) Europäisches Patentamt
European Patent Office
Office européen des brevets

(11) EP 1 342 764 A2

(12) **DEMANDE DE BREVET EUROPEEN**

(43) Date de publication:
**10.09.2003 Bulletin 2003/37**

(51) Int Cl.[7]: **C09J 151/06**

(21) Numéro de dépôt: **03290314.8**

(22) Date de dépôt: **07.02.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(30) Priorité: **26.02.2002 FR 0202394**

(71) Demandeur: **Atofina**
**92800 Puteaux (FR)**

(72) Inventeurs:
- **Baumert, Martin**
  **27470 Serquigny (FR)**
- **Court, François**
  **27470 Fontaine L'Abbe (FR)**
- **Laurichesse, Christian**
  **27300 Bernay (FR)**

(54) **Adhésifs thermofusibles à base de copolymères greffés à blocs polyamides**

(57) la présente invention concerne une composition adhésive thermofusible comprenant :

- 20 à 80% d'un mélange comprenant :
  - 50 à 100% de (A) désignant un copolymère greffé à blocs polyamide constitué d'un tronc en polyoléfine et d'au moins un greffon en polyamide,
  - 0 à 50% d'au moins un polymère (B) choisi parmi les polyoléfines et les polyamides,
- 80 à 20% d'un mélange comprenant au moins une résine tackifiante et éventuellement au moins un produit choisi parmi les cires, les plastifiants et les charges minérales,

dans laquelle :

- ledit greffon est attaché au tronc par les restes d'un monomère insaturé (X) choisi parmi les acides carboxyliques insaturés, les anhydrides d'acides carboxyliques insaturés et les époxydes insaturés,
- les restes du monomère insaturé (X) sont fixés sur le tronc par greffage ou copolymérisation depuis sa double liaison,
- la masse molaire $\overline{Mn}$ des greffons est comprise entre 1000 et 5000,
- la température de fusion des greffons est comprise entre 100 et 190°C,
- le MFI de (A) est compris entre 1 et 500 (g/10min à 190°C sous une charge de 2,16kg).

Cette composition présente de nombreux avantages :

Elle se met en oeuvre aux températures habituelles des adhésifs thermofusibles c'est à dire vers 180°C,
Il n'est pas nécessaire, après application, d'attendre une réticulation,
elle est plus simple à mettre en oeuvre que les colles à deux composants telles que les époxy ou il faut un durcisseur,
elle présente une température de fluage sous charge nettement améliorée (test SAFT) par comparaison avec les adhésifs thermofusibles réticulables.

EP 1 342 764 A2

## Description

[domaine de l'invention]

La présente invention concerne des adhésifs thermofusibles à base de copolymères greffés à blocs polyamide.

Les colles (adhésifs) thermofusibles sont des matériaux thermoplastiques solides à la température ambiante et qui par chauffage (environ vers 180°C) deviennent des liquides plus ou moins visqueux. Ces liquides sont appliqués sur un premier substrat puis on le couvre avec une seconde surface. Par refroidissement, on obtient une adhérence entre le substrat et la deuxième surface. Le temps ouvert est la période pendant laquelle la colle qui a été appliquée sur un substrat qui est à la température ambiante reste collante, c'est-à-dire l'intervalle de temps pendant lequel on peut appliquer la seconde surface et par refroidissement obtenir une adhérence entre le substrat et la seconde surface. Passé ce délai du temps ouvert on ne peut plus obtenir une adhérence suffisante entre le substrat et la seconde surface. Ces colles sont désignées par l'abréviation HMA (hot melt adhesives).

Les adhésifs thermofusibles n'offrent que des tenues en température sous charge limitées le plus souvent à 60-70 °C, ce qui leur interdit certaines applications dans les domaines tels que: automobile, bâtiment, emballage, textile, placage de bois et reliure haut de gamme. Les adhésifs de la présente invention présentent une augmentation de la tenue thermique. L'adhésif thermofusible selon l'invention trouve des applications dans le domaine du bâtiment, de l'automobile, de l'emballage, de la reliure, du bois.

[l'art antérieur et le problème technique]

Le brevet US 5506296 décrit des adhésifs thermofusibles à tenue thermique améliorée constitués de composants réticulables à l'humidité. Ce document décrit une composition adhésive thermofusible à base d'un copolymère EVA (copolymère de l'éthylène et de l'acétate de vinyle) et de polyisocyanate, le copolymère EVA étant un copolymère d'indice de fluidité à 190°C sous une charge de 2,16 kg compris entre 100 et 1000 g/10min et comprenant, par rapport au poids dudit copolymère : 1) 60 à 90 % d'éthylène, 2)10 à 40 % d'acétate de vinyle, 3) 5 à 20 méq OH d'un termonomère éthylènique insaturé portant au moins une fonction hydroxyle primaire par mole, ladite composition ne contenant substantiellement pas de fonction hydroxyle libre. Ces adhésifs ont certes une bonne tenue thermique mais il faut attendre que la réticulation soit terminée et de plus l'utilisation d'isocyanates peut poser des problèmes de toxicité. Un autre inconvénient est aussi la durée de conservation (pot life) de ces adhésifs, avant de les appliquer, qui peut être fortement réduite si la composition n'est pas protégée de l'humidité.

Le brevet WO 0162804 décrit des polymères thermoréversibles à fonctions nitroxyde. Il concerne la préparation de résines branchées ou réticulées par traitement thermique d'un polymère en présence d'un multinitroxyde et le cas échéant d'un initiateur de radicaux libres, de façon à obtenir une résine présentant la propriété de thermoréversibilité. Le polymère de départ peut être un caoutchouc ou un polymère thermoplastique. Les résines obtenues offrent des conditions de mise en oeuvre similaires à celles des polymères de départ tout en présentant des propriétés mécaniques améliorées.

Le brevet US 5049626 décrit un copolymère greffé à blocs polyamide obtenu par la réaction (i) d'un tronc qui est un terpolymère de l'éthylène, d'un acrylate d'alkyle ou d'un ester vinylique et de monoxyde de carbone avec (ii) un polyamide monoaminé de masse $\overline{Mn}$ comprise entre 600 et 10000 et de préférence entre 600 et 4000. Ce copolymère est éventuellement mélangé avec une résine tackifiante.

Le brevet GB 2262939 décrit un copolymère greffé à blocs polyamide obtenu par la réaction (i) d'un tronc qui est un copolymère de l'éthylène et d'acide acrylique avec (ii) un polyamide amorphe monoaminé. Ce copolymère est utilisé tel quel pour revêtir des plaques d'acier.

Le brevet EP 1036817 décrit un copolymère greffé à blocs polyamide obtenu par la réaction (i) d'un tronc qui est un copolymère de l'éthylène, du propylène et éventuellement d'une autre alpha oléfine sur lequel on a greffé de l'anhydride maleique avec (ii) un polyamide de masse $\overline{Mn}$ comprise entre 3000 et 30000 et de préférence entre 5000 et 20000. Ce copolymère est ensuite mis en solution dans le toluène et cette solution est pulvérisée sur des plaques de polypropylène.

Le brevet JP 60184579 A1 un copolymère greffé à blocs polyamide 6 obtenu par la réaction (i) d'un tronc qui est un copolymère de l'éthylène et d'un ester vinylique sur lequel on a greffé de l'anhydride maleique avec (ii) un polyamide 6. Ce copolymère est ensuite mélangé avec une résine tackifiante.

Le brevet EP 455412 décrit un copolymère greffé à blocs polyamide 6 obtenu par la réaction (i) d'un tronc qui est un terpolymère de l'éthylène, d'un acrylate d'alkyle et d'un monomère (m) capable de réagir avec une fonction amine avec (ii) un polyamide 6 monoaminé de masse $\overline{Mn}$ comprise entre 1000 et 3000. Une condition supplémentaire est qu'après fixation du PA 6 sur le tronc il reste sur ledit tronc au moins 0,02 moles de (m) n'ayant pas réagi pour 100g de tronc. Une autre condition est que le MFI (abréviation de Melt Flow Index ou indice de fluidité à l'état fondu)

du terpolymère avant greffage soit supérieur ou égal à 500 (g/10min à 190°C sous une charge de 2,16kg). Les greffons PA 6 ont une température de fusion d'environ 205°C. Le MFI à 190°C de ce copolymère à blocs polyamide n'est pas mesurable à cause de la viscosité très élevée, il est nécessaire de le mélanger avec un plastifiant pour en faire un adhésif.

On a maintenant trouvé des adhésifs thermofusibles à base d'un copolymère greffé à blocs en polyamide obtenu par la réaction (i) d'un tronc en polyoléfine comprenant un monomère capable de réagir avec une fonction aminé avec (ii) un polyamide monoaminé de masse $\overline{Mn}$ comprise entre 1000 et 5000, ledit copolymère greffé ayant un MFI compris entre 1 et 500 (g/10min à 190°C sous une charge de 2,16kg).

[Brève description de l'invention]

la présente invention concerne un composition adhésive thermofusible comprenant :

- 20 à 80% d'un mélange comprenant :
  - ➢ 50 à 100% de (A) désignant un copolymère greffé à blocs polyamide constitué d'un tronc en polyoléfine et d'au moins un greffon en polyamide,
  - ➢ 0 à 50% d'au moins un polymère (B) choisi parmi les polyoléfines et les polyamides,
- 80 à 20% d'un mélange comprenant au moins une résine tackifiante et éventuellement au moins un produit choisi parmi les cires, les plastifiants et les charges minérales,

dans laquelle :

- ledit greffon est attaché au tronc par les restes d'un monomère insaturé (X) choisi parmi les acides carboxyliques insaturés, les anhydrides d'acides carboxyliques insaturés et les époxydes insaturés,
- les restes du monomère insaturé (X) sont fixés sur le tronc par greffage ou copolymérisation depuis sa double liaison,
- la masse molaire $\overline{Mn}$ des greffons est comprise entre 1000 et 5000,
- la température de fusion des greffons est comprise entre 100 et 190°C,
- le MFI de (A) est compris entre 1 et 500 (g/10min à 190°C sous une charge de 2,16kg).

Cette composition présente de nombreux avantages :

Elle se met en oeuvre aux températures habituelles des adhésifs thermofusibles c'est à dire vers 180°C,
Il n'est pas nécessaire, après application, d'attendre une réticulation, elle est plus simple à mettre en oeuvre que les colles à deux composants telles que les époxy ou il faut un durcisseur,
elle présente une température de fluage sous charge nettement améliorée (test SAFT) par comparaison avec les adhésifs thermofusibles réticulables.

Ces copolymères greffés à blocs polyamides s'organisent en structure à l'échelle nanométrique ce qui leur confère des propriétés de résistance thermomécaniques exceptionnelles.

[Description détaillée de l'invention]

**S'agissant de (A) le copolymère greffé à blocs copolyamides** il peut être obtenu par réaction d'un polyamide à extrémité aminé avec les restes d'un monomère insaturé X fixé par greffage ou copolymerisation sur un tronc en polyoléfine.

**Ce monomère X** peut être un époxyde insaturé, un acide carboxylique insaturé tel que par exemple l'acide (meth)acrylique ou un de ses sels ou un anhydride d'acide carboxylique insaturé ou même un hemiester d'un anhydride d'acide carboxylique insaturé. L'anhydride d'acide carboxylique insaturé peut être choisi par exemple parmi les anhydrides maléique, itaconique, citraconique, allylsuccinique, cyclohex-4-ène-1,2-dicarboxylique, 4—méthylènecyclohex-4-ène-1,2-dicarboxylique, bicyclo(2,2,1)hept-5-ène-2,3-dicarboxylique, et x—méthylbicyclo(2,2,1)hept-5-ène-2,2-dicarboxylique. On utilise avantageusement l'anhydride maléique. On ne sortirait pas du cadre de l'invention en remplaçant tout ou partie de l'anhydride par un acide carboxylique insaturé tel que par exemple l'acide (meth)acrylique. De même l'anhydride peut être en partie hydrolysé. Des exemples d'époxydes insaturés sont notamment :

- les esters et éthers de glycidyle aliphatiques tels que l'allylglycidyléther, le vinylglycidyléther, le maléate et l'itaconate de glycidyle, l'acrylate et le méthacrylate de glycidyle, et

- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.

**S'agissant du tronc en polyoléfine,** on définit une polyoléfine comme un homo polymère ou copolymère d'alpha oléfines ou de dioléfines, telles que par exemple, éthylène, propylène, butène-1, octène-1, butadiène. A titre d'exemple, on peut citer :

- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR (abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

Avantageusement les troncs en polyoléfine sur lesquels sont attachés les restes de X sont des polyéthylènes greffés par X ou des copolymères de l'éthylène et de X qu'on obtient par exemple par polymérisation radicalaire.
La proportion de X est avantageusement comprise entre 0,001 et 0,1 moles pour 100g de polymère tronc et de préférence entre 0,001 et 0,05.
S'agissant des polyéthylènes sur lesquels on vient greffer X on entend par polyéthylène des homo- ou copolymères.
A titre de comonomères, on peut citer :

- les alpha-oléfines, avantageusement celles ayant de 3 à 30 atomes de carbone. Des exemples ont été cités plus haut. Ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.
- le polyethylene peut comprendre plusieurs des comonomères précédents.

Avantageusement le polyéthylène qui peut être un mélange de plusieurs polymères, comprend au moins 50% et de préférence plus de 75% (en moles) d'éthylène, sa densité peut être comprise entre 0,86 et 0,98 g/cm$^3$. Le MFI (indice de viscosité à 190°C, 2,16 kg) est compris avantageusement entre 5 et 2000 g/10 min.
A titre d'exemple de polyéthylènes on peut citer :

- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène,
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%.

Le greffage est une opération connue en soi.
S'agissant des copolymères de l'éthylène et de X c'est-à-dire ceux dans lesquels X n'est pas greffé il s'agit des copolymères de l'éthylène, de X et éventuellement d'un autre monomère pouvant être choisi parmi les comonomères qu'on a cité plus haut pour les copolymères de l'éthylène destinés à être greffés.

On utilise avantageusement les copolymères éthylène-anhydride maléique et éthylène - (méth)acrylate d'alkyle - anhydride maléique (MAH). Ces copolymères comprennent de 0,1 à 10 % en poids d'anhydride maléique (soit environ 0,001 à 0,1 moles de MAH pour 100g de copolymère) et avantageusement de 1 à 5% en poids de MAH. Ils comprennent de 0 à 50 %, avantageusement de 10 à 50 et de préférence 15 à 35 % en poids de (méth)acrylate d'alkyle. Leur MFI est compris entre 10 et 2000 (190°C - 2,16 kg) avantageusement entre 60 et 1000. Les (méth)acrylates d'alkyle ont déjà été décrits plus haut. La température de fusion est comprise entre 60 et 100 °C .

**S'agissant du polyamide à extrémité amine:** Avantageusement les constituants du greffon ainsi que leurs proportions sont choisies pour que la température de fusion du greffon soit comprise entre 100 et 190°C et de préférence entre 140 et 160°C. La proportion de greffons peut être comprise entre 10 et 50% en poids de (A) c'est à dire de l'ensemble du tronc et des greffons. De préférence cette proportion est comprise entre 15 et 35%.

On entend par homopolyamide les produits de condensation d'un lactame (ou de l'aminoacide correspondant) ou d'un diacide avec une diamine (ou leurs sels), on ne tient pas compte du limiteur de chaîne qui peut être un diacide ou une diamine dans le cas des lactames et un autre diacide ou une autre diamine dans le cas des polyamides résultant de la condensation d'une diamine avec un diacide. On entend par copolyamide les précédents dans lesquels il y a au moins un monomère de plus que nécessaire, par exemple deux lactames ou une diamine et deux acides ou encore une diamine, un diacide et un lactame. Les greffons peuvent être des PA 11 ou PA 12 pourvu que les température de fusion soient dans la plage spécifiée. Avantageusement ce sont des copolyamides.

**Selon un premier type les copolyamides** résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone. Les copolyamides de ce premier type peuvent comprendre aussi des motifs qui sont des restes de diamines et diacides carboxyliques.

A titre d'exemple d'acide dicarboxylique on peut citer des diacides tels que les acides isophtalique, téréphtalique, adipique, azélaïque, subérique, sébacique, nonanedioïque et l'acide dodécanédioïque.

A titre d'exemple de diamine on peut citer l'hexaméthylène-diamine, la dodécaméthylènediamine, la métaxylylènediamine, le bis-p aminocyclohexylméthane et la triméthylhexaméthylène diamine.

A titre d'exemple d'acide alpha oméga aminocarboxylique on peut citer l'acide aminocaproïque, l'acide aminoundécanoïque et l'acide aminododécanoïque.

A titre d'exemple de lactame on peut citer le caprolactame, l'oenantholactame et le laurolactame (2-Azacyclotridécanone).

**Selon un deuxième type les copolyamides** résultent de la condensation d'au moins un acide alpha-oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut. La diamine peut être une diamine aliphatique branchée, linéaire ou cyclique ou encore arylique. A titre d'exemples on peut citer l'hexaméthylènediamine, la pipérazine, l'isophorone diamine (IPD), le méthyl pentaméthylènediamine (MPDM), la bis (aminocyclohéxyl) méthane (BACM), la bis(3-méthyl-4 aminocyclohéxyl) méthane (BMACM).

Les procédés de fabrication des copolyamides sont connus de l'art antérieur et ces copolyamides peuvent être fabriqués par polycondensation, par exemple en autoclave.

Le degré de polymérisation peut varier dans de larges proportions, selon sa valeur c'est un copolyamide ou un oligomère de copolyamide. Dans la suite du texte on utilisera indifferemment les deux expressions pour les greffons.

Pour que le polyamide ait une terminaison monoamine il suffit d'utiliser un limiteur de chaîne de formule

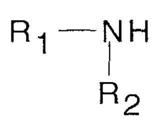

dans laquelle :

$R_1$ est l'hydrogène ou un groupement alkyle linéaire ou ramifié contenant jusqu'à 20 atomes de carbone, $R_2$ est un groupement ayant jusqu'à 20 atomes de carbone alkyle ou alcenyle linéraire ou ramifié, un radical cycloaliphatique saturé ou non, un radical aromatique ou une combinaison des précédents. Le limiteur peut être par exemple la laurylamine ou l'oleylamine.

Avantageusement le polyamide à extrémité aminé a une masse molaire $\overline{Mn}$ comprise entre 1500 et 3000 g/mole.

Les limitateurs monofonctionnels de polymérisation préférés sont la laurylamine et l'oléylamine. La polycondensation définie ci-dessus s'effectue selon les procédés habituellement connus, par exemple à une température

comprise en général entre 200 et 300 °C, sous vide ou sous atmosphère inerte, avec agitation du mélange réactionnel. La longueur de chaîne moyenne de l'oligomère est déterminée par le rapport molaire initial entre le monomère polycondensable ou le lactame et le limitateur monofonctionnel de polymérisation. Pour le calcul de la longueur de chaîne moyenne, on compte habituellement une molécule de limitateur de chaîne pour une chaîne d'oligomère.

L'addition de l'oligomère monoaminé de copolyamide sur le tronc de polyoléfine contenant X s'effectue par réaction d'une fonction aminé de l'oligomère avec X. Avantageusement X porte une fonction anhydride ou acide, on crée ainsi des liaisons amides ou imides.

On réalise l'addition de l'oligomère à extrémité amine sur le tronc de polyoléfine contenant X de préférence à l'état fondu. On peut ainsi, dans une extrudeuse, malaxer l'oligomère et le tronc à une température généralement comprise entre 180 et 250 °C. Le temps de séjour moyen de la matière fondue dans l'extrudeuse peut être compris entre 15 secondes et 5 minutes, et de préférence entre 1 et 3 minutes. Le rendement de cette addition est évalué par extraction sélective des oligomères de copolyamide libres c'est-à-dire ceux qui n'ont pas réagi pour former le copolymère greffé à blocs copolyamides final.

La préparation de tels copolyamides à extrémité amine ainsi que leur addition sur un tronc de polyoléfine contenant X est décrite dans les brevets US 3976720, US 3963799, US 5342886 et FR 2291225.

A titre d'exemple de greffons on peut citer (on ne cite que les monomères essentiels et pas le limiteur de chaîne monoamine) :

**Le copolyamide 6/11** résultant de la condensation du caprolactame et de l'acide aminoundécanoïque, la proportion de motifs caprolactame pouvant être comprise entre 15 et 60% en poids et avantageusement entre 30 et 55.

**Le copolyamide 6/12** résultant de la condensation du caprolactame et du lauryllactame, la proportion de motifs caprolactame pouvant être comprise entre 0 et 100% en poids et avantageusement entre 20 et 55.

**Le copolyamide 6/11/12-6** résultant de la condensation du caprolactame, de l'acide aminoundécanoïque, de la diamine en C12 et de l'acide adipique. La proportion de caprolactame peut être comprise entre 20 et 70% en poids et avantageusement entre 30 et 60%.

**Le copolyamide 6-9/11** résultant de la condensation de la diamine en C6, du diacide en C9 et de l'acide aminoundécanoïque, la proportion de l'acide aminoundécanoïque pouvant être comprise entre 30 et 80% en poids et avantageusement entre 40 et 60%.

**Le copolyamide 6-9/12** résultant de la condensation de la diamine en C6, du diacide en C9 et du lauryllactame, la proportion du lauryllactame pouvant être comprise entre 20 et 95% en poids et avantageusement entre 40 et 75%.

**Le copolyamide 6-6/11** résultant de la condensation de la diamine en C6, du diacide en C6 et de l'acide aminoundécanoïque, la proportion de l'acide aminoundécanoïque pouvant être comprise entre 50 et 80% en poids et avantageusement entre 55 et 65%.

le MFI de (A) est avantageusement compris entre 1 et 100 et de préférence entre 5 et 30 (g/10min à 190°C sous une charge de 2,16kg).

Les copolymères greffés à blocs polyamides de la présente invention sont caracterisés par une organisation nano structurée avec des lamelles de polyamide d'épaisseur comprise entre 10 et 50 nanomètres.

**S'agissant du polymère (B)** c'est avantageusement une polyoléfine. Des exemples de polyoléfines ont été cités plus haut. Avantageusement (B) est choisi parmi les copolymères de l'éthylène et d'un acrylate, les copolymères de l'éthylène et de l'acétate de vinyle et les polyéthylènes métallocène. (B) est de préférence un copolymère de l'éthylène et d'un monomère acrylate (comme l'acrylate de méthyle, l'acrylate d'éthyle, l'acrylate de butyle, l'acrylate d'éthyl-2-hexyle) et/ou l'acétate de vinyle. Dans ce cas, la quantité de comonomère acrylate ou acétate de vinyle va généralement de 10 à 45 % en poids. On ne sortirait pas du cadre de l'invention si la composition comprend plusieurs polymères (B).

**La composition de l'invention comprend aussi** au moins une résine tackifiante et éventuellement au moins un produit choisi parmi les cires, les plastifiants et les charges minérales.

**Des résines tackifiantes** qui conviennent, sont par exemple la colophane, les esters de colophane, la colophane hydrogénée, les polyterpènes et dérivés, les résines de pétrole aromatiques ou aliphatiques, les résines cycliques hydrogénées. Ces résines ont typiquement une température de ramollissement bille anneau entre 25°C et 180°C et de préférence entre 50°C et 135°C.

D'autres exemples de dérivés de la colophane sont décrits dans ULLMAN'S ENCYCLOPEDIA OF INDUSTRIAL CHEMISTRY, 5e édition Vol A 23 p. 79 - 86, le contenu étant incorporé dans la présente demande.

A titre de dérivés de la colophane on peut citer ceux obtenus par hydrogénation, deshydrogénation, polymérisation, estérification. Ces dérivés peuvent être utilisés tels quels ou sous forme d'esters de polyols tels que les esters de pentaerythritol, polyéthylène glycol et glycérol. A titre de résine tackifiante on peut encore citer les dicyclopentadiènes.

Les adhésifs de l'invention peuvent contenir **des cires**. Elles permettent d'ajuster la fluidité, le temps ouvert et le temps de prise. Les cires peuvent être récupérées lors du raffinage de fractions pétrolières. Ce sont par exemple des cires consistant essentiellement en hydrocarbures paraffiniques et contenant des quantités suffisantes d'hydrocarbures, ramifiés, cycliques et aromatiques pour être beaucoup moins cristallines que des paraffines. On peut aussi utiliser des cires synthétiques telles que les cires FISCHER TROPSCH. Avantageusement, les cires de paraffines utilisées dans les colles de l'invention ont une température de fusion supérieure à 50°C et de préférence entre 60°C et 70°C.

**Les plastifiants** que l'on peut utiliser dans les adhésifs de l'invention sont par exemple des huiles minérales paraffiniques aromatiques ou naphténiques. Ils servent essentiellement à baisser la viscosité et à apporter du tack. A titre d'exemple de plastifiant on peut encore citer les phtalates, azelates, adipates, le phosphate de tricresyl et les polyesters.

Les adhésifs de l'invention peuvent contenir **des charges**. A titre d'exemples de charges, on peut citer la silice, l'alumine, le verre, les billes de verre, les carbonates de calcium, les fibres, et hydroxydes métalliques. Ces charges ne doivent pas réduire le tack ni les propriétés mécaniques de la colle après son application.

**Quant aux proportions des différents constituants** la proportion du mélange de (A) et (B) est avantageusement de 25 à 50% et de préférence de 30 à 40% pour respectivement 75 à 50% et 70 à 60% de l'ensemble de la résine tackifiante, des cires, plastifiants et charges.

**Les colles thermofusibles de l'invention sont préparées** par mélange de ses constituants à l'état fondu (sauf les charges minérales qui restent solides) à des températures entre 130°C et 200°C jusqu'à ce qu'on obtienne un mélange homogène. La durée de mélange peut être de l'ordre de 30 minutes à 3 heures. On peut utiliser les dispositifs habituels des thermoplastiques tels que des extrudeuses, des cylindres, des mélangeurs Banbury ou Brabender, ou des mélangeurs à hélice.

Les mélanges de l'invention peuvent comprendre aussi des agents fluidifiants tels que de la silice, de l'éthylène-bis -amide, du stéarate de calcium ou du stearate de magnesium. Ils peuvent aussi comprendre des antioxydants, des anti U.V. et des pigments de coloration.

Le copolymère (A) peut être fabriqué d'abord puis il est mélangé avec les autres ingrédients de la composition de l'invention. C'est ce qui est décrit dans les paragraphes précédents.

(A) peut aussi être fabriqué pendant son mélange avec les autres ingrédients de la composition d'adhésif (résine tackifiante, cire, plastifiant, charge, stabilisant, etc.) auquel cas la fixation des greffons de copolyamide se produit "in situ" au cours de la préparation de la composition finale d'adhésif. Les compositions de l'invention peuvent par exemple être préparés en une étape dans une extrudeuse. Dans les premières zones on introduit le tronc contenant X (par exemple un copolymère éthylène-(meth)acrylate d'alkyle-anhydride maleique), le copolyamide à extrémité amine puis quelques zones plus loin le polymère éventuel (B) et les autres constituants tels que la résine tackifiante etc .. . On peut aussi introduire dans la première zone de l'extrudeuse tous les ingrédients qui ont été auparavant mélangés par dry blend (mélange à sec).

Dans les exemples suivants on utilise le test SAFT, c'est un test mesurant la température maximale supportée par un joint collé sous une charge statique donnée. On opère de la façon suivante :

> On dépose de l'adhésif à environ 150°C sur une première éprouvette en carton de dimension 150 x 25 mm puis application immédiate d'une seconde éprouvette identique à la première. La surface de collage ainsi obtenue est de 25 x 25 = 625 $mm^2$. On laisse refroidir les éprouvettes au minimum 4h en pièce climatisée à 23°C avec 50% d'humidité relative.

L'assemblage collé est ensuite suspendu verticalement dans une étuve par l'intermédiaire de la première éprouvette, la seconde éprouvette étant chargée avec une masse de 500g puis soumis à une montée en température de 25°C à 200°C à la vitesse de 0,4°C/min. La tenue "SAFT" est la température à laquelle l'assemblage cède (séparation des éprouvettes l'une de l'autre).

[Exemples]

**Exemple 1**

Un terpolymère d'éthylène, de module de flexion 30 MPa, de masse molaire moyenne en poids $\overline{Mw}$ 50 000 g/mole comprenant 20% en poids d'acrylate d'éthyle et 3 % en poids d'anhydride maléique copolymérisé de melt index (MFI) égal à 70 g/10 min (sous 2,16 kg /190°C) est malaxé sur une extrudeuse bi-vis co-rotative Leistritz® équipée de plusieurs zones de malaxage, ayant un profil de température entre 180 et 200°C, avec un polycaprolactame-co-lauryllactame (coPA 6/12) de masse moléculaire de 2950 g/mole à terminaison mono-amine, synthétisé selon la méthode décrite dans le brevet US 5342886. Le terpolymère contient en moyenne 0,029 mol/100g d'anhydride maleique.

Le copolyamide-mono-$NH_2$ 6/12 a une composition en poids 40/60 et une température de fusion de 133 °C. L'enthalpie de fusion est 40 J/g. Les proportions introduites dans l'extrudeuse sont telles que le rapport polyoléfine du tronc / copolyamide à terminaison amine est en poids de 80/20.

Le produit ainsi réalisé est analysé par microscopie électronique par transmission en révélant la phase polyamide par un traitement consistant à faire des coupes ultrafines puis à les traiter dans une solution aqueuse d'acide phosphotungstique pendant 30 min à 60°C; le PA apparaît en sombre. La morphologie est à l'échelle nanométrique et lamellaire ou cocontinue : les lamelles (10-20 nm) de copolyamide sont connectées ce que conduit aux excellentes propriétés thermomécaniques. Ce copolymère greffé a un SAFT de 136 °C et il tient sous une contrainte de 0,05 N/mm pendant au moins 15 min (allongement = 3 %). La viscosité est, grâce à la température de fusion, faible : le produit a un MFI de 9 g/10 min (190 °C, 2.16 kg). Le module en flexion est de 95 MPa.

**Exemple 2**

Le terpolymère est le même qu'à l'exemple 1. Le copolyamide est également terminé avec une fonction $NH_2$ par chaîne, mais il s'agit d'un copolymère de caprolactame (6) et amino-undecylacide (11) avec une composition 55/45 et une température de fusion de 143 °C, l'enthalpie de fusion est faible : 27 J/g et sa masse de 2250 g/mole. Après réaction dans l'extrudeuse comme décrit dans l'exemple 1 (composition en masse de terpolymère/copolyamide 80/20), le copolymère greffé est obtenu avec les propriétés suivantes : La morphologie est à l'échelle nanométrique et lamellaire ou cocontinue : les lamelles (10-20 nm) de copolyamide sont connectées. Malgré les propriétés thermomécaniques médiocres, le copolymère greffé a un SAFT de 154 °C. Le produit ne tient pas sous 0,05 N/cm à 120 °C, probablement dû au faible taux de cristallinité. La viscosité est grâce à la température de fusion faible : le produit a un MFI de 10 g/10 min (190 °C, 2.16 kg).

**Exemple 3**

Le terpolymère utilisé est le même qu'à l'exemple 1. Le copolyamide est également terminé avec une fonction $NH_2$ par chaîne, mais il s'agit d'un copolymère de caprolactame (6) et lauryllactame (12) avec une composition 20/80 et une température de fusion de 155 °C, l'enthalpie de fusion est 58 J/g et sa masse de 2790 g/mole. Après réaction dans l'extrudeuse comme décrit dans l'exemple 1 (composition en masse de terpolymère/copolyamide 80/20), un copolymère greffé est obtenu avec les propriétés suivantes : La morphologie est à l'échelle nanométrique et lamellaire ou cocontinue : les lamelles (10-20 nm) de copolyamide sont connectées ce que conduit aux excellents propriétés thermomécaniques. Le copolymère greffé a un SAFT de 145 °C et il tient sous une contrainte de 0,05 N/mm pendant au moins 15 min. et un MFI de 20 g/10 min (190 °C, 2.16 kg).

**Exemple 4 comparatif**

Le terpolymère utilisé est le même qu'à l'exemple 1. Le copolyamide est également terminé avec une fonction $NH_2$ par chaîne, mais il s'agit d'un homopolymère PA6 . Il a donc une température de fusion de 213 °C, l'enthalpie de fusion est de 70 J/g et sa masse moléculaire est de 2440g/mole. Après réaction dans l'extrudeuse comme décrit dans l'exemple 1 (composition en masse de terpolymère/polyamide 80/20), un copolymère greffé est obtenu avec les propriétés suivantes : La morphologie est à l'échelle nanométrique et lamellaire ou cocontinue: les lamelles (10-20 nm) de copolyamide sont connectées ce qui conduit aux excellentes propriétés thermomécaniques. Le produit tient sous une contrainte de 0,05 N/mm pendant au moins 15 min (allongement 1%). Dû à la température de fusion du greffon élevée, le produit est très visqueux et le MFI n'est pas mesurable à 190°C, 2,16 kg. Le produit a un MFI de 27 g/10 min à 230 °C, 2.16 kg.

**Exemples 5-13 :** Formulations hot melt.

Les copolymères greffés à blocs copolyamides des exemples 1-4 ont été évalués dans des formulations de type hot melt pour application bois. Dans le tableau 1 ci-dessous on a reporté les différentes formulations réalisées avec leurs principales caractéristiques .

**La viscosité Brookfield** est exprimée en mPa.s , elle a été mesurée avec (mobile 29), on précise la température et la vitesse en tours par minute (rpm). Les matières premières utilisées dans les formulations sont les suivantes:

- **Novarès®** TN150( Rütgers VFT) désigne une résine tackifiante de type hydrocarbure ,
- **Dertopoline®** P125 (DRT) désigne une résine tackifiante de type ester de colophane ,
- **Irganox®** 1010 (CIBA) est un antioxydant,
- **Lotryl®** 28BA175 (ATOFINA) désigne un copolymère éthylène acrylate de butyle à 28 % en poids d'acrylate et

de MFI : 175 (en g/10 mn à 190°C sous une charge de 2,16 kg selon ASTM D 1238), Tg 80°C.

Tableau 1

| composition | Ex 5 | Ex 6 | Ex 7 | Ex 8 (comparatif) | référence |
|---|---|---|---|---|---|
| (A) (exemple 2) | 40 | | | | hot melt à base d'EVA, copolymère éthylène acétate de vinyle à 28% en poids d'acétate |
| (A) (exemple 1) | | 40 | | | |
| (A) (exemple 3) | | | 40 | | |
| (A) (exemple 4) | | | | 40 | |
| Novares TN150 | 15 | 15 | 15 | 15 | |
| Dertopoline P125 | 15 | 15 | 15 | 15 | |
| Carbonate de Ca | 30 | 30 | 30 | 30 | |
| Irganox 1010 | 0.5 | 0.5 | 0.5 | 0.5 | |
| Viscosité Brookfield mPas Mobile 29 | | | | | 156000 (vit. 5 rpm) 325000 (vit. 2,5 rpm) |
| 220°C vit. 1 rpm | 534 000 | 534 000 | 595 000 | non mesurable | |
| 200°C vit. 1 rpm | non mesurable | non mesurable | non mesurable | non mesurable | |
| température bille anneau (°C) | 189 | 188 | 186 | > 190 | 151 |
| Température SAFT (°C) | 145 | 134 | 146 | >150 | 100 |

On note de très bonnes tenues en température SAFT mais les viscosités sont trop élevées pour permettre une application industrielle correcte de ce type de hot melt. Des essais ont donc été réalisés en mélange avec des copolymères de plus haut MFI afin d'abaisser la viscosité du mélange final.

Tableau 1 (suite)

| composition | Ex 9 | Ex 10 | Ex 11 | Ex 12 | Ex 13 |
|---|---|---|---|---|---|
| (A) (exemple 3) | 32 | 24 | 20 | 30 | 24 |
| Lotryl 28BA175 | 8 | 16 | 20 | | 8 |
| Novares TN150 | 15 | 15 | 15 | 20 | 20 |
| Dertopoline P125 | 15 | 15 | 15 | 20 | 20 |
| Carbonate de Ca | 30 | 30 | 30 | 30 | 30 |
| Irganox 1010 | 0.5 | 05 | 0.5 | 0.5 | 0.5 |
| Viscosité Brookfield mPas Mobile 29 220°C vit 5 rpm | 158 000 | 126 000 | 102 000 | 140 000 | 120 000 |
| 200°C vit 2.5 rpm | non mesurable | non mesurable | non mesurable | non mesurable | 290 000 |
| température bille anneau en °C | 170 | 161 | 156 | 165 | 160 |
| Température SAFT en °C | 145 | 117 | 113 | 135 | 132 |

On note qu'il est avantageux de ne pas diluer avec un autre polymère au delà de 50 % car on note une chute significative des propriétés de tenue en température de l'adhésif.

Une autre solution a consisté à diminuer la quantité globale de polymère dans la formulation et l'on s'aperçoit qu'avec des taux de polymère de l'ordre de 30% on arrive à conserver de bonnes propriétés de tenue en température de l'adhésif.

## Revendications

1. Composition adhésive thermofusible comprenant :

   - 20 à 80% d'un mélange comprenant :

     - ➢ 50 à 100% de (A) désignant un copolymère greffé à blocs polyamide constitué d'un tronc en polyoléfine et d'au moins un greffon en polyamide,
     - ➢ 0 à 50% d'au moins un polymère (B) choisi parmi les polyoléfines et les polyamides,

   - 80 à 20% d'un mélange comprenant au moins une résine tackifiante et éventuellement au moins un produit choisi parmi les cires, les plastifiants et les charges minérales,

   dans laquelle :

   - ledit greffon est attaché au tronc par les restes d'un monomère insaturé (X) choisi parmi les acides carboxyliques insaturés, les anhydrides d'acides carboxyliques insaturés et les époxydes insaturés,
   - les restes du monomère insaturé (X) sont fixés sur le tronc par greffage ou copolymérisation depuis sa double liaison,
   - la masse molaire $\overline{Mn}$ des greffons est comprise entre 1000 et 5000,
   - la température de fusion des greffons est comprise entre 100 et 190°C,
   - le MFI de (A) est compris entre 1 et 500 (g/10min à 190°C sous une charge de 2,16kg).

2. Composition selon la revendication 1 dans laquelle la proportion de X est comprise entre 0,001 et 0,1 moles pour 100g de polymère tronc.

3. Composition selon la revendication 2 dans laquelle la proportion est comprise entre 0,001 et 0,05.

4. Composition selon l'une quelconque des revendications précédentes dans laquelle le tronc en polyoléfine est un copolymère éthylène - (méth)acrylate d'alkyle - anhydride maléique (MAH) ou un copolymère éthylène - anhydride maléique (MAH).

5. Composition selon la revendication 4 dans laquelle le tronc en polyoléfine comprend de 0,1 à 10 % en poids d'anhydride maléique.

6. Composition selon la revendication 4 ou 5 dans laquelle le tronc en polyoléfine comprend de 0 à 50% en poids de (méth)acrylate d'alkyle.

7. Composition selon la revendication 6 dans laquelle la proportion de (méth)acrylate d'alkyle est entre 10 et 50%.

8. Composition selon la revendication 7 dans laquelle la proportion de (méth)acrylate d'alkyle est entre 15 et 35%.

9. Composition selon l'une quelconque des revendications 4 à 8 dans laquelle le MFI du tronc en polyoléfine est compris entre 10 et 2000 (190°C - 2,16 kg).

10. Composition selon la revendication 9 dans laquelle le MFI est compris entre 60 et 1000 (190°C - 2,16 kg).

11. Composition selon l'une quelconque des revendications précédentes dans laquelle la température de fusion du greffon est comprise entre 140 et 160°C.

12. Composition selon l'une quelconque des revendications précédentes dans laquelle la proportion de greffons est comprise entre 10 et 50% en poids de (A) c'est à dire de l'ensemble du tronc et des greffons.

**13.** Composition selon la revendication 12 dans laquelle la proportion est comprise entre 15 et 35%.

**14.** Composition selon l'une quelconque des revendications précédentes dans laquelle le MFI de (A) est compris entre 1 et 100 (g/10min à 190°C sous une charge de 2,16kg).

**15.** Composition selon la revendication 14 dans laquelle le MFI est compris entre 5 et 30.

**16.** Composition selon l'une quelconque des revendications précédentes dans laquelle la proportion du mélange de (A) et (B) est de 25 à 50% pour respectivement 75 à 50% de l'ensemble de la résine tackifiante, des cires, plastifiants et charges.

**17.** Composition selon la revendication 16 dans laquelle la proportion du mélange de (A) et (B) est de 30 à 40% pour respectivement 70 à 60% de l'ensemble de la résine tackifiante, des cires, plastifiants et charges.